# EUROPEAN PATENT SPECIFICATION

(11) **EP 1 431 250 B1**
(45) Date of publication and mention of the grant of the patent: **16.11.2005**
(21) Application number: 03257465.9
(22) Date of filing: 26.11.2003
(51) Int. Cl.: C02F 1/469, C02F 1/44, C02F 9/06, C02F 9/02, C02F 103/04, C02F 1/28

(54) **Water purification system and method**
System und Verfahren zur Reinigung von Wasser
Système et procédé de purification de l'eau

(30) Priority: 20.12.2002 US 324214
(43) Date of publication of application: 23.06.2004
(73) Proprietor: Barnstead Thermolyne Corporation, Dubuque, Iowa 52001 (US)
(72) Inventor: Tilp, Joseph T., Dubuque, Iowa 52001 (US); Willman, Eric J., Dubuque, Iowa 52002 (US)
(74) Representative: Findlay, Alice Rosemary

(56) References cited:
- US-A- 6 162 361
- US-B1- 6 461 512
- US-B1- 6 461 514

## Description

The invention relates to the purification of water and, in particular, to apparatus and methods for producing high-purity, laboratory-quality water.

Laboratory-quality or reagent-grade water of high purity is commonly provided by different conventional technologies each capable of removing dissolved ions attributable to soluble salts from a stream of feed water. One conventional technique for purifying water is distillation that vaporizes the feed water and then traps and condenses steam for removing ions to generate high-purity product water. Another conventional technique for purifying water is reverse osmosis (RO) that relies upon selective permeation through a thin porous membrane to produce high-purity product water depleted of ions. Yet another conventional technique for purifying is deionization (DI) that passes a stream of feed water through an ion exchange resin bed containing a material having functional groups capable of removing ions. Yet another conventional technique for purifying water is electro-deionization (EDI) that applies an electric field across an ion exchange resin bed. Water provided to an EDI unit requires pretreatment by an RO system and, if the feed water is particularly hard, may require softening by a water softener. These purification techniques are usually combined, such as a combination of RO with either DI or EDI, for providing product water having the requisite purity for use as laboratory-quality or reagent-grade water.

Another conventional technique, capacitive deionization (CDI), passes a stream of feed water through a stack of electrochemical capacitive deionization cells. The cells contain high surface area, low-resistance electrodes polarized for removing ions from the feed water stream electrostatically for capture on the surfaces of the electrodes. In terms of cost effectiveness, CDI is considerably more energy efficient than distillation. In addition, CDI does not require regeneration with either acids or bases as do ion exchange resins. Instead, a CDI module merely requires reversal of the polarization to regenerate the electrodes.

High purity water is required, for example, to prepare reagents in the laboratory that are substantially free of impurity species originating from the water. If the water contains impurities, then the reagent concentration cannot be assured and certified as pure. High purity water is also used to rinse plastic ware and glassware in the laboratory and may be used in media preparation, biological applications, and in clinical areas for dilution and other purposes.

Producing high-purity, laboratory-quality water is typically an expensive enterprise. For example, ion exchange resin beds used in DI are either disposed of after being exhausted or regenerated using caustic chemicals, as mentioned above. Regeneration of the ion exchanged resin beds produces a waste stream of hazardous chemicals. Water treatment by RO results in only about a 15 percent recovery rate, meaning that there will be 15 volumes of purified water produced for every 100 volumes of feed water. In other words, RO processing is highly inefficient because 85 percent of the feed water is sent to the drain along with the removed dissolved ions.

What is needed, therefore, is a water purification system that can generate a stream of high-purity, laboratory-quality product water without the inefficiencies of conventional water purification systems.

The present invention provides a water purification system that overcomes the drawbacks and disadvantages of prior water purification systems. The water purification system of the invention includes a reverse osmosis unit and a capacitive deionization unit. The reverse osmosis unit has a feed water inlet capable of receiving a flow of feed water, a permeate outlet providing a permeate stream, and a concentrate outlet providing a concentrate stream. The reverse osmosis unit is operative for removing at least dissolved ions from the feed water to provide a permeate stream depleted of dissolved ions and a concentrate stream enriched in dissolved ions. The capacitive deionization module has an inlet coupled in fluid communication with said concentrate outlet of said reverse osmosis unit and an outlet coupled in fluid communication with said feed water inlet of said reverse osmosis unit. The deionization module is operative for removing dissolved ions from the concentrate stream.

In an alternative embodiment, the water purification system further includes a second capacitive deionization module having an inlet coupled in fluid communication with the concentrate outlet of the reverse osmosis unit and an outlet selectively coupled in fluid communication with the inlet of the reverse osmosis unit. The second capacitive deionization module is operative for removing dissolved ions from the concentrate stream. The outlets of the first and the second capacitive deionization modules are alternatingly coupled in fluid communication with the concentrate outlet of the reverse osmosis unit.

According to the principles of the invention, a method is provided for purifying a stream of feed water that includes directing the stream of feed water to an inlet of a reverse osmosis unit to produce an output stream of permeate water depleted of dissolved ions and an output stream of concentrate water enriched in dissolved ions, removing dissolved ions from the output stream of concentrate water with a capacitive deionization module, and directing the output stream of concentrate water, after the dissolved ions are removed by the capacitive deionization unit, to the inlet of the reverse osmosis unit.

The invention will now be further described by way of example with reference to the accompanying drawings in which:
Fig. 1 is a schematic view of a water purification system in accordance with the principles of the invention;
Fig. 2 is a schematic view of an alternative embodiment of a water purification system in accordance with the principles of the invention;
Fig. 3 is a schematic view of an alternative embodiment of a water purification system in accordance with the principles of the invention; and
Fig. 4 is a schematic view of an alternative embodiment of a water purification system in accordance with the principles of the invention.

Although the invention will be described next in connection with certain embodiments, the invention is not limited to practice in any one specific type of water purification system. It is contemplated that the invention can be used with a variety of water purification systems, including but not limited to purification systems providing purified water for end uses such as laboratories, drinking water and semiconductor fabrication.

Those skilled in the art will recognize that the components described herein could be arranged in multiple different ways.

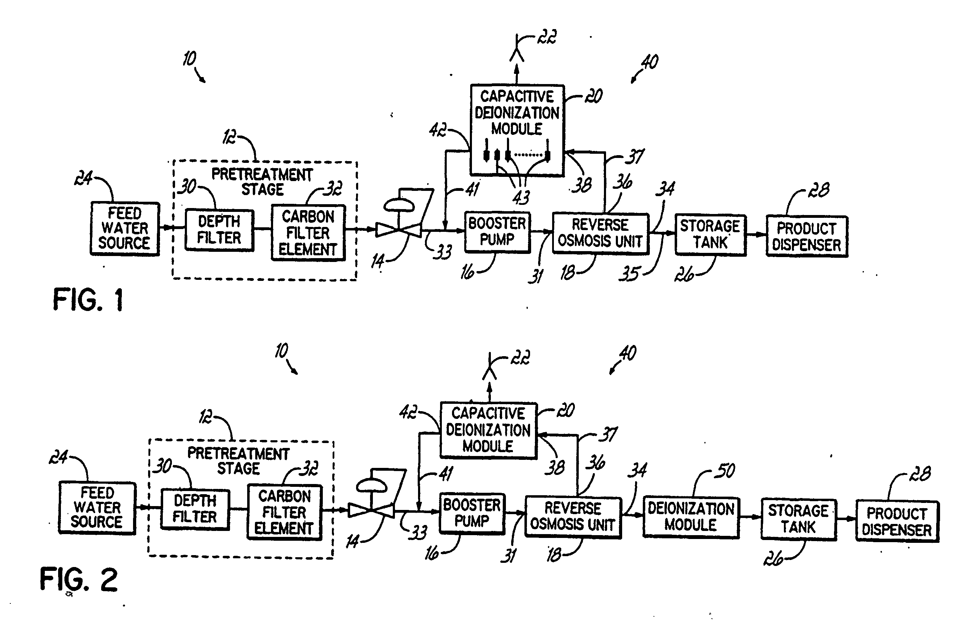

With reference to Fig. 1, a water purification system 10 according to the principles of the invention for producing high-purity product water includes a pretreatment (PT) stage 12, a pressure regulator 14, a booster pump 16, a reverse osmosis (RO) unit 18, a capacitive deionization (CDI) module 20, and a drain 22, which are collectively coupled in fluid communication. A stream of feed water is provided from a feed water source 24 to the PT stage 12 and a stream of purified product water is transferred to a storage tank 26. The storage tank 26 serves as a reservoir for receiving and holding the high-purity product water produced by the water purification system 10. A product dispenser 28, such as a tap or a faucet, is used to dispense the purified product water from the storage tank 26.

The PT stage 12 is operative for removing particulate matter, organic compounds, and free chlorine and other halogens. Specifically, PT stage 12 typically consists of depth filtering with a depth filter 30 and filtering with an activated carbon filter element 32. The depth filter 30 incorporates a tortuous, random matrix of small fibers, such as cotton, cellulose, synthetic yarns, or meltblown polymer fibers, through which the feed water supplied from feed water source 24 passes and upon which particulate matter suspended in the feed water is captured. The activated carbon filter element 32 removes organic compounds and free chlorine and other halogens from the feed water stream. The pressure regulator 14 is positioned in a fluid line 33 coupling the PT stage 12 in fluid communication with a feed water inlet 31 of the RO unit 18 for reducing the feed pressure of the filtrate stream exiting the PT stage 12.

The booster pump 16, also positioned in the fluid line 33 coupling the PT stage 12 with the feed water inlet 31 of RO unit 18, elevates the water pressure of the filtrate stream exiting the PT stage 12 to a suitable operating pressure so as to provide an adequate driving force for the operation of the RO unit 18. Typically, the operating pressure is in the range of about 60 psig to about 1000 psig. The invention contemplates that the RO unit 18 may comprise a single RO element, multiple RO elements coupled in parallel for fluid communication, or multiple RO elements coupled in series for fluid communication. Each RO element of RO unit 18 includes a thin semipermeable membrane operative for removing dissolved ions, typically in the form of dissolved salts, from the filtrate stream received from the PT stage 12. A permeate stream is created from the portion of the filtrate stream that penetrates the membrane of each RO element in the RO unit 18. A concentrate stream, in which the concentrated dissolved ions rejected by the membrane of RO unit 18 are entrained, is formed by the remainder of the filtrate stream that exits the RO unit 18. The RO unit 18 removes most of the dissolved ions and dissolved organic matter from the filtrate stream. Typically, the RO unit 18 is effective for removing more than about 95 percent of the dissolved organic matter from the filtrate stream and for reducing the concentration of dissolved ions by a factor of about 10 to 20 from the filtrate stream so that the permeate stream is high-purity product water.

The RO unit 18 has a permeate outlet 34 coupled in fluid communication by a fluid line 35 with the storage tank 26 for directing the permeate stream to the storage tank 26, which collects the high-purity water for subsequent dispensing from product dispenser 28. The RO unit 18 also has a concentrate outlet 36 coupled in fluid communication by a fluid line 37 with the CDI module 20 so that the concentrate stream is directed to an inlet 38 of the CDI module 20. Typically, the permeate stream constitutes about 15 percent by volume of the filtrate stream received from the PT stage 12 and the concentrate stream constitutes about 85 percent by volume of the filtrate stream received from the PT stage 12.

The CDI module 20 is incorporated in a recirculation path, generally indicated by reference numeral 40, that recycles the concentrate stream back to the feed water inlet 31 of the RO unit 18. Specifically, the inlet 38 of the CDI module 20 receives the concentrate stream, which would otherwise have been sent in a conventional water purification system to drain 22. The CDI module 20 operates to further remove residual dissolved ions in the concentrate stream to provide an output stream significantly depleted of dissolved ions. The output stream is directed by a fluid line 41 from an outlet 42 of the CDI module 20 to fluid line 33 downstream of pressure regulator 14 and upstream of the feed water inlet 31 of the RO unit 18. It follows that the output stream from the CDI module 20 is blended or combined with the filtrate stream from the PT stage 12 and reenters the RO unit 18. Recirculation path 40 generally includes fluid lines 37 and 41.

The CDI module 20 includes a plurality of electrochemical capacitive deionization cells each consisting of spaced-apart pairs of electrodes 43, each of which operates as a flow-through capacitor to provide an electrochemical cell. The electrodes 43 are formed of porous conductive material having a high specific surface area, including high-specific-surface-area active carbon structures such as sheets formed of carbon aerogel. Each electrochemical cell of the CDI module 20 is polarized by applying an electrical potential to the electrodes 43.

The CDI module 20 operates cyclically with a purification mode and a regeneration mode. In the purification mode, dissolved ions arriving in the concentrate stream from the RO unit 18 are held or trapped electrostatically at the surfaces of the charged electrodes 43. The CDI module 20 has a certain charging capacity for holding dissolved ions that, when reached, requires that the CDI module be regenerated to flush the trapped dissolved ions to drain 22. In the regeneration mode, the concentrate stream flowing through the CDI module 20 is directed to the drain 22 and the electrochemical cells of CDI module 20 are regenerated or rejuvenated by reversing the polarity of the applied electrical potential to electrodes 43 for a flushing cycle of sufficient duration to desorb substantially all of the trapped dissolved ions into the concentrate stream. The production of purified product water may be discontinued when the CDI module 20 is regenerating. Typically, 25 volumes of water are sent to drain 22 in the regeneration mode for every 75 volumes of water purified by the CDI modules 20 and returned to the inlet of the RO unit 18. As a result, the amount of water directed to drain 22 is significantly reduced by the introduction of the recirculation path 40 having the CDI module 20 than would otherwise be sent to the drain 22 by the output of the RO unit 18. Therefore, the presence of the CDI module 20 significantly reduces the volume of wasted water sent to drain 22, which reduces the operating expense associated with generating the purified product water.

The CDI module 20 may be any module suitable for performing capacitive deionization that removes dissolved ions from a water stream. Exemplary CDI modules 20 for use in the invention are disclosed in U.S. Patent Nos. 6,413,409, 6,346,187 and 6,325,907, the disclosure of each of which is hereby incorporated by reference herein in its entirety.

The incorporation of the CDI module 20 and recirculation path 40 also increases the purity of the purified product water in the permeate stream because the CDI module 20 operates for removing a significant fraction of the residual dissolved ions in the concentrate stream that remain after treatment by the RO unit 18. When operating in the purification mode, the CDI module 20 typically removes about 90 percent of the ions in the concentrate stream. As a result, the water entering the feed water inlet 31 of the RO unit 18 is depleted of dissolved ions by approximately 80 percent as compared with a conventional purification system lacking the recirculation path and CDI module 20. The recirculation path 40 and CDI module 20 improve the removal of dissolved ions in the permeate stream exiting the RO unit 18 by a factor of about 5. Typically, this results in a 50-fold to 100-fold reduction in ion concentration in the permeate steam compared with a 10-fold to 20-fold absolute reduction in ion concentration in conventional water purification systems relying solely upon a RO unit for ion removal.

Other benefits derived from the recirculation path 40 and CDI module 20 include an improved operation cost and an improved performance of downstream technologies and processes. For example, reagent concentrations prepared using the purified product water from the water purification system 10 are more likely to be assured. Water is also conserved by significantly reducing the volume sent to the drain 22.

In use, a stream of feed water is provided to the PT stage 12 from the feed water source 24. The depth filter 30 of PT stage 12 captures particulate matter suspended in the feed water and the activated carbon filter element 32 of PT stage 12 removes large organic compounds and free chlorine from the stream of feed water. The outlet pressure of the filtrate stream exiting the PT stage 12 is reduced by pressure regulator 14 and directed to the feed water inlet 31 of the RO unit 18. The pressure of the filtrate stream is then boosted by booster pump 16 to an operating pressure suitable for the RO unit 18. The RO element of the RO unit 18 removes dissolved ions and dissolved organic matters from the filtrate stream arriving from the PT stage 12, as boosted in pressure by the booster pump 16. The permeate stream from the RO unit 18 is directed to storage tank 26 for storage as purified product water that is subsequently dispensed from product dispenser 28. The CDI module 20 receives the concentrate stream arriving from the RO unit 18 and electrostatically traps residual dissolved ions in the concentrate stream at the surfaces of its charged electrodes when operating in the purification mode. The output stream from the CDI module 20 is directed to the feed water inlet 31 of the RO unit 18, wherein the output stream, highly depleted of dissolved ions, is admixed with the filtrate stream arriving from PT stage 12. The mixture of the filtrate stream and output stream enters the feed water inlet 31 of the RO unit 18.

With reference to Fig. 2 in which like reference numerals refer to like features in Fig. 1 and in an alternative embodiment, water purification system 10 may further include a secondary purification element, such as deionization (DI) module 50, positioned in the fluid path between the RO unit 18 and the storage tank 26, or generally downstream from the water purification system 10. The DI module 50 contains an ion exchange resin bed containing a material having functional groups capable of removing ions. Permeate emitted from the permeate outlet 34 from RO unit 18 enters an inlet of DI module 50 and, after this purification step, is exhausted to the storage tank 26. It is contemplated that the permeate from the RO unit 18 may be further purified by other types of purification technologies, such as an electrodeionization (EDI) module (not shown), that also incorporates an ion exchange resin bed. The significant reduction in the ion concentration in the permeate exiting the RO unit 18, according to the principles of the invention, has the benefit of reducing the operating cost for downstream purification systems, such as DI module 50, that further purify the permeate using an ion exchange resin bed. As a result, the frequency of regenerating the ion exchange resin bed is reduced which lowers the requisite volume of caustic chemicals and decreases the volume of the waste stream of spent caustic chemicals.

Water purification system 10 also eliminates the need for a water softening process upstream of the RO unit 18 before any downstream EDI modules (not shown) receive the permeate stream. As a result, such downstream EDI modules are less likely to be compromised by scaling and a water softener is not required for pretreating the filtrate provided to the RO unit 18.

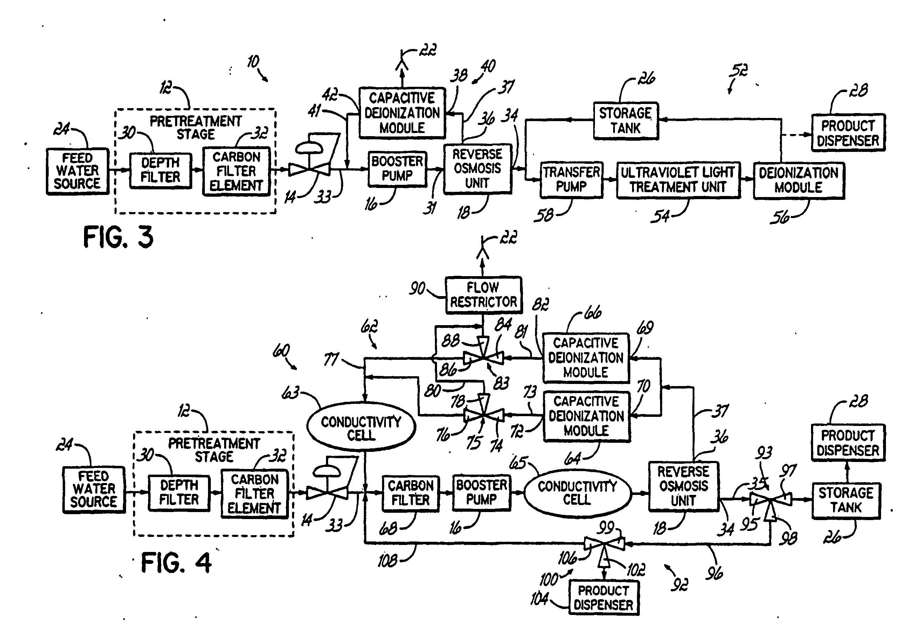

With reference to Fig. 3 in which like reference numerals refer to like features in Fig. 1 and in an alternative embodiment, the storage tank 26 of the water purification system 10 may further include a recirculation path, indicated generally by reference numeral 52. The recirculation path 52 includes an ultraviolet (UV) light treatment unit 54 and a deionization (DI) module 56 similar to DI module 50. High-purity product water is pumped from storage tank 26 by a transfer pump 58 through the UV light treatment unit 54 and the DI module 56 and is returned to the storage tank 26. The UV light treatment unit 54 disinfects or sterilizes the high-purity product water held in the storage tank 26 so as to restrict bacterial growth and removes total organic carbon (TOC) from the high-purity product water.

With reference to Fig. 4 in which like reference numerals refer to like features in Fig. 1 and in an alternative embodiment, a water purification system 60 may include a recirculation path 62 equipped with a pair of CDI modules 64, 66. An additional carbon filter element 68, similar to carbon filter element 32, is provided in the fluid line 33 between the pressure regulator 14 and the booster pump 16. The water purification system 60 may be equipped with conductivity cells 63, 65 at various points in the flow pathway for monitoring the water conductivity, which is indicative of the residual concentration of dissolved ions.

An inlet 70 of CDI module 64 and an inlet 69 of CDI module 66 are collectively coupled in fluid communication by a fluid line 71 with the concentrate outlet 36 of the RO unit 18 in a duplex arrangement. An outlet 72 of CDI module 64 is coupled in fluid communication by a fluid line 73 with an inlet 74 of a three-way fitting 75 having one outlet 76 selectively coupled in fluid communication with fluid line 77 to permit flow to fluid line 33 for closing recirculation path 62 returning water to the feed water inlet 31 of RO unit 18 during purification mode. Another outlet 78 of the three-way fitting 75 is selectively coupled in fluid communication by a fluid line 80 with a flow path to drain 22 for permitting flow to drain 22 during regeneration mode. Similarly, an outlet 82 of CDI module 66 is coupled in fluid communication by a fluid line 81 with an inlet 84 of a three-way fitting 83 having one outlet 86 selectively coupled in fluid communication with fluid line 77 to permit flow to fluid line 33 for closing recirculation path 62 returning water to the feed water inlet 31 of RO unit 18 during purification mode. Another outlet 88 of the three-way fitting 83 is selectively coupled in fluid communication by fluid line 80 with a flow path to drain 22 for permitting flow to drain 22 during regeneration mode. A flow restrictor 90 is positioned in the flow path, provided partially by fluid line 80, between the outlets 78, 88 and the drain 22.

In a continuous mode of operation, one of the CDI modules, for example, CDI module 64, operates in its purification mode to produce an output stream directed by three-way fitting 75 from outlet 72 through fluid line 77 to the feed water inlet 31 of the RO unit 18 while the other of the CDI modules, for example, CDI module 66, is operating in its regeneration mode with its output stream diverted from outlet 82 by three-way fitting 83 through fluid line 80 to the drain 22. Such an operation of the CDI modules 64, 66 continuously generates purified product water without interruption. In the continuous mode of operation, purified product water is continuously dispensed as at least one of outlet 72 of CDI module 64 or outlet 82 of CDI module 66 is alternatingly in fluid communication with the feed water inlet 31 of RO unit 18.

It is apparent that, in the continuous mode of operation, both of the outlets 72 and 82 may simultaneously coupled in fluid communication with the feed water inlet 31 of the RO unit 18. This would occur, for example, if the flushing cycle of, for example, CDI module 64 concludes while CDI module 66 is operating in purification mode and its charging capacity has not been exceeded. In this instance, the three-way fitting 83 may be switched so that the output stream from outlet 82 is directed through outlet 86 to the feed water inlet 31 of the RO unit 18.

In a batch mode of operation, the permeate stream from the RO unit 18 is diverted in a recirculation path, generally indicated by reference numeral 92, coupling the permeate outlet 34 with fluid line 33 upstream of the feed water inlet 31 to the RO unit 18, and the water purification system 60 is isolated from the feed water source 24 so that feed water does not enter system 60. The permeate stream admixes with the output stream from the CDI module 20, which are collectively directed to the feed water inlet 31 of the RO unit 18. The recirculation in the batch mode of operation continuously removes dissolved ions from the water to incrementally increase the water purity. Recirculation through the recirculation path 92 may be discontinued when a desired water purity is achieved.

The recirculation path 92 is selectively coupled by a three-way fitting 93 in fluid communication with the fluid line 37 carrying the permeate stream exiting the RO unit 18. An inlet 95 of the three-way fitting 93 receives the permeate stream, which may be directed to the storage tank 26 via outlet 97. The recirculation path 92 includes a fluid line 96 coupling an outlet 98 of three-way fitting 93 with an inlet 99 of a three-way fitting 100. One outlet 102 of three-way fitting 100 is selectively coupled in fluid communication with a product dispenser 104. Another outlet 106 of three-way fitting 100 is selectively coupled by fluid line 108 in fluid communication with fluid line 33 upstream of the inlet to the RO unit 18.

In use, the three-way fitting 93 is adjusted to direct permeate water received from the RO unit 18 through outlet 98 to fluid line 96 of recirculation path 92. The permeate water flowing in fluid line 96 may diverted by three-way fitting 100 either through outlet 102 to product dispenser 104 or through outlet 106 to fluid line 108 for recirculation to fluid line 33 upstream of the feed water inlet 31 of RO unit 18. As volumes of permeate water are drawn from system 60 using product dispenser 104, additional feed water may be introduced from the feed water source 24 as needed for maintaining a constant water volume in system 60.

## Claims

1. A water purification system for purifying feed water from a feed water source to provide high-purity water, comprising:
a reverse osmosis unit having a feed water inlet capable of receiving a flow of feed water, a permeate outlet providing a permeate stream, and a concentrate outlet providing a concentrate stream, said reverse osmosis unit operative for removing at least dissolved ions from the feed water to provide a permeate stream depleted of dissolved ions and a concentrate stream enriched in dissolved ions; and
a capacitive deionization module having an inlet coupled in fluid communication with said concentrate outlet of said reverse osmosis unit and an outlet coupled in fluid communication with said feed water inlet of said reverse osmosis unit, said deionization module operative for removing dissolved ions from the concentrate stream.

2. The water purification system of claim 1, further comprising a pretreatment stage positioned in a flow path between the feed water source and said reverse osmosis unit, said pretreatment stage operative for removing impurities from the feed water.

3. The water purification system of claim 2, wherein said pretreatment stage further comprises a filter operative for capturing particulate matter suspended in the feed water.

4. The water purification system of either claim 2 or claim 3, wherein said pretreatment stage further comprises a filter operative for removing organic compounds present in the feed water.

5. The water purification system of any one of claims 2 to 4, wherein said pretreatment stage further comprises a filter operative for removing halogens present in the feed water.

6. The water purification system of any preceding claim, further comprising a booster pump operative for increasing the pressure of the feed water provided to said inlet of said reverse osmosis unit.

7. The water purification system of any preceding claim, further comprising a secondary purification element coupled in fluid communication with said permeate outlet.

8. The water purification system of claim 7, wherein said second purification element comprises an ion exchange resin bed.

9. The water purification system of any preceding claim, further comprising a storage tank coupled in fluid communication with said permeate outlet.

10. The water purification system of claim 9, further comprising a recirculation path coupled in fluid communication with said storage tank, said recirculation path including an ultraviolet light treatment unit operative for treating the permeate water held by said storage tank.

11. The water purification system of claim 10, further comprising a purification element disposed in said recirculation path, said purification element having an ion exchange resin bed for removing ions from the permeate water held by said storage tank.

12. The water purification system of claim 9, further comprising a recirculation path coupled in fluid communication with said storage tank, said recirculation path including a purification element having an ion exchange resin bed for removing ions from the permeate water held by said storage tank.

13. The water purification system of any preceding claim, wherein the outlet of the capacitive deionization module is selectively coupled in fluid communication with said inlet of said reverse osmosis unit, and the system further comprises a second capacitive deionization module having an inlet coupled in fluid communication with said concentrate outlet of said reverse osmosis unit and an outlet selectively coupled in fluid communication with said inlet of said reverse osmosis unit, said second deionization module operative for removing dissolved ions from the concentrate stream.

14. The water purification system of claim 13, wherein said outlet of said first capacitive deionization module and said outlet of said second capacitive deionization module are alternatingly coupled in fluid communication with said inlet of said reverse osmosis unit.

15. A method of purifying a stream of feed water, comprising:
directing the stream of feed water to an inlet of a reverse osmosis unit to produce an output stream of permeate water depleted of dissolved ions and an output stream of concentrate water enriched in dissolved ions;
removing dissolved ions from the output stream of concentrate water with a capacitive deionization module; and
directing the output stream of concentrate water, after the dissolved ions are removed by the capacitive deionization unit, to the inlet of the reverse osmosis unit.

16. The method of claim 15, further comprising:
collecting the output stream of permeate water in a storage tank.

17. The method of claim 16, further comprising:
recirculating the permeate water collected in the storage tank; and
treating the recirculated water using ultraviolet light.

18. The method of either claim 16 or claim 17, further comprising:
recirculating the permeate water collected in the storage tank; and
filtering the recirculated water using a purification element having an ion exchange resin bed.

19. The method of any one of claims 15 to 18, further comprising:
pretreating the stream of feed water before directing the stream of feed water to the inlet of the reverse osmosis unit

20. The method of claim 19, wherein the pretreating includes capturing particulate matter suspended in the stream of feed water.

21. The method of either claim 19 or claim 20, wherein the pretreating includes removing organic compounds present in the stream of feed water.

22. The method of any one of claims 19 to 21, wherein the pretreating includes removing halogens present in the stream of feed water.

23. The method of any one of claims 19 to 22, further comprising boosting the pressure of the stream of feed water provided to the inlet of the reverse osmosis unit.

24. The method of any one of claims 19 to 23, further comprising purifying the stream of permeate water with a secondary purification element downstream of the RO unit.

## Patentansprüche

1. Wasserreinigungssystem zum Reinigen von Speisewasser von einer Speisewasserquelle, um hochreines Wasser zu liefern, umfassend:
eine Umkehrosmoseeinheit mit einem Speisewassereinlass, der in der Lage ist, einen Strom aus Speisewasser aufzunehmen, einen Permeatauslass, der einen Permeatstrom liefert, und einen Konzentratauslass, der einen Konzentratstrom liefert, wobei die Umkehrosmoseeinheit in der Lage ist, mindestens gelöste Ionen aus dem Speisewasser zu entfernen, um einen Permeatstrom zu liefern, der frei von gelösten Ionen ist, sowie einen Konzentratstrom, der mit gelösten Ionen angereichert ist; und
ein Modul für kapazitive Deionisation mit einem Einlass, der zur Flüssigkeitsübertragung mit dem Konzentratauslass der Umkehrosmoseeinheit verbunden ist, und einen Auslass, der zur Flüssigkeifsübertragung mit dem Speisewassereinlass der Umkehrosmoseeinheit verbunden ist, wobei das Deionisationsmodul in der Lage ist, gelöste Ionen aus dem Konzentratstrom zu entfernen.

2. Wasserreinigungssystem nach Anspruch 1, ferner umfassend eine Vorbehandlungsstufe, die in einem Durchflussweg zwischen der Speisewasserquelle und der Umkehrosmoseeinheit positioniert ist, wobei die Vorbehandlungsstufe in der Lage ist, Verunreinigungen aus dem Speisewasser zu entfernen.

3. Wasserreinigungssystem nach Anspruch 2, wobei die Vorbehandlungsstufe ferner ein Filter umfasst, das in der Lage ist, im Speisewasser suspendierte Feststoffe zu erfassen.

4. Wasserreinigungssystem nach Anspruch 2 oder Anspruch 3, wobei die Vorbehandlungsstufe ferner ein Filter umfasst, das in der Lage ist, organische Verbindungen zu entfernen, die im Speisewasser vorhanden sind.

5. Wasserreinigungssystem nach einem der Ansprüche 2 bis 4, wobei die Vorbehandlungsstufe ferner ein Filter umfasst, das in der Lage ist, Halogene zu entfernen, die im Speisewasser vorhanden sind.

6. Wasserreinigungssystem nach einem der vorhergehenden Ansprüche, ferner umfassend eine Verstärkerpumpe, die in der Lage ist, den Druck des Speisewassers zu erhöhen, das zum Einlass der Umkehrosmoseeinheit geleitet wird.

7. Wasserreinigungssystem nach einem der vorhergehenden Ansprüche, ferner umfassend ein sekundäres Reinigungselement, das zur Flüssigkeitsübertragung mit dem Permeatauslass verbunden ist.

8. Wasserreinigungssystem nach Anspruch 7, wobei das zweite Reinigungselement ein lonenaustausch-Harzbett umfasst.

9. Wasserreinigungssystem nach einem der vorhergehenden Ansprüche, ferner umfassend einen Speichertank, der zur Flüssigkeitsübertragung mit dem Permeatauslass verbunden ist.

10. Wasserreinigungssystem nach Anspruch 9, ferner umfassend eine Rückführungsbahn, die zur Flüssigkeitsübertragung mit dem Speichertank verbunden ist, wobei die Rückführungsbahn eine UV-Licht-Wasseraufbereitungseinheit enthält, die in der Lage ist, das Permeatwasser aufzubereiten, das im Speichertank gespeichert wird.

11. Wasserreinigungssystem nach Anspruch 10, ferner umfassend ein Reinigungselement, das in der Rückführungsbahn angeordnet ist, wobei das Reinigungselement ein lonenaustausch-Harzbett aufweist, um Ionen aus dem Permeatwasser zu entfernen, das im Speichertank gespeichert wird.

12. Wasserreinigungssystem nach Anspruch 9, ferner umfassend eine Rückführungsbahn, die zur Flüssigkeitsübertragung mit dem Speichertank verbunden ist, wobei die Rückführungsbahn ein Reinigungselement enthält, das ein lonenaustausch-Harzbett aufweist, um Ionen aus dem Permeatwasser zu entfernen, das im Speichertank gespeichert wird.

13. Wasserreinigungssystem nach einem der vorhergehenden Ansprüche, wobei der Auslass des Moduls für kapazitive Deionisation selektiv zur Flüssigkeitsübertragung mit dem Einlass der Umkehrosmoseeinheit verbunden ist, und das System ferner ein zweites Modul für kapazitive Deionisation umfasst, das einen Einlass aufweist, der zur Flüssigkeitsübertragung mit dem Konzentratauslass der Umkehrosmoseeinheit verbunden ist, und einen Auslass, der selektiv zur Flüssigkeitsübertragung mit dem Einlass der Umkehrosmoseeinheit verbunden ist, wobei das zweite Deionisationsmodul in der Lage ist, gelöste Ionen aus dem Konzentratstrom zu entfernen.

14. Wasserreinigungssystem nach Anspruch 13, wobei der Auslass des ersten Moduls für kapazitive Deionisation und der Auslass des zweiten Moduls für kapazitive Deionisation abwechselnd zur Flüssigkeitsübertragung mit dem Einlass der Umkehrosmoseeinheit verbunden sind.

15. Verfahren zum Reinigen eines Speisewasserstromes, umfassend:
Leiten des Speisewasserstromes zu einem Einlass einer Umkehrosmoseeinheit, um einen Permeatwasser-Ausgangsstrom zu erzeugen, der frei von gelösten Ionen ist, und einen Konzentratwasser-Ausgangsstrom, der mit gelösten Ionen angereichert ist;
Entfernen gelöster Ionen aus dem Konzentratwasser-Ausgangsstrom mittels eines Moduls für kapazitive Deionisation; und
Leiten des Konzentratwasser-Ausgangsstromes zum Einlass der Umkehrosmoseeinheit, nachdem die gelösten Ionen mittels der Einheit für kapazitive Deionisation entfernt wurden.

16. Verfahren nach Anspruch 15, ferner umfassend:
Sammeln des Permeatwasser-Ausgangsstromes in einem Speichertank.

17. Verfahren nach Anspruch 16, ferner umfassend:
Rückführen des Permeatwassers, das im Speichertank gesammelt wurde; und
Aufbereiten des rückgeführten Wassers unter Verwendung von ultraviolettem Licht.

18. Verfahren nach Anspruch 16 oder Anspruch 17, ferner umfassend:
Rückführen des Permeatwassers, das im Speichertank gesammelt wurde; und
Filtern des rückgeführten Wassers unter Verwendung eines Reinigungselementes, das ein lonenaustausch-Harzbett aufweist.

19. Verfahren nach einem der Ansprüche 15 bis 18, ferner umfassend:
Vorbehandeln des Speisewasserstromes, bevor dieser zum Einlass der Umkehrosmoseeinheit geleitet wird.

20. Verfahren nach Anspruch 19, wobei das Vorbehandeln das Erfassen von im Speisewasserstrom suspendierten Feststoffen beinhaltet.

21. Verfahren nach Anspruch 19 oder Anspruch 20, wobei das Vorbehandeln das Entfernen von organischen Verbindungen beinhaltet, die im Speisewasserstrom vorhanden sind.

22. Verfahren nach einem der Ansprüche 19 bis 21, wobei das Vorbehandeln das Entfernen von Halogenen beinhaltet, die im Speisewasserstrom vorhanden sind.

23. Verfahren nach einem der Ansprüche 19 bis 22, ferner umfassend das Erhöhen des Drucks des Speisewasserstromes, der zum Einlass der Umkehrosmoseeinheit geführt wird.

24. Verfahren nach einem der Ansprüche 19 bis 23, ferner umfassend das Reinigen des Permeatwasserstromes mittels eines sekundären Reinigungselementes, das hinter der Umkehrosmoseeinheit angeordnet ist.

## Revendications

1. Système de purification d'eau pour purifier de l'eau d'alimentation depuis une source d'eau d'alimentation pour produire de l'eau très pure, comprenant :
une unité d'osmose inverse ayant une entrée d'eau d'alimentation capable de recevoir un écoulement d'eau d'alimentation, une sortie de perméat produisant un flot de perméat, et une sortie de concentré produisant un flot de concentré, ladite unité d'osmose inverse étant opérationnelle pour éliminer au moins les ions dissous de l'eau d'alimentation pour produire un flot de perméat appauvri en ions dissous et un flot de concentré enrichi en ions dissous ; et
un module de déionisation capacitif ayant une entrée couplée en communication fluidique avec ladite sortie de concentré de ladite unité d'osmose inverse et une sortie couplée en communication fluidique avec ladite entrée d'eau d'alimentation de ladite unité d'osmose inverse, ledit module de déionisation étant opérationnel pour éliminer les ions dissous du flot de concentré.

2. Système de purification d'eau selon la revendication 1, comprenant en outre un étage de prétraitement positionné dans un trajet d'écoulement entre la source d'eau d'alimentation et ladite unité d'osmose inverse, ledit étage de prétraitement étant opérationnel pour éliminer des impuretés de l'eau d'alimentation.

3. Système de purification d'eau selon la revendication 2, dans lequel ledit étage de prétraitement comprend un filtre opérationnel pour capturer les matières particulaires en suspension dans l'eau d'alimentation.

4. Système de purification d'eau selon la revendication 2 ou la revendication 3, dans lequel ledit étage de prétraitement comprend en outre un filtre opérationnel pour éliminer les composés organiques présents dans l'eau d'alimentation.

5. Système de purification d'eau selon l'une quelconque des revendications 2 à 4, dans lequel ledit étage de prétraitement comprend en outre un filtre opérationnel pour éliminer les halogènes présents dans l'eau d'alimentation.

6. Système de purification d'eau selon l'une quelconque des revendications précédentes, comprenant en outre une pompe de surpression opérationnelle pour augmenter la pression de l'eau d'alimentation fournie à ladite entrée de ladite unité d'osmose inverse.

7. Système de purification d'eau selon l'une quelconque des revendications précédentes, comprenant en outre un élément de purification secondaire couplé en communication fluidique avec ladite sortie de perméat.

8. Système de purification d'eau selon la revendication 7, dans lequel ledit second élément de purification comprend un lit de résine échangeuse d'ions.

9. Système de purification d'eau selon l'une quelconque des revendications précédentes, comprenant en outre un réservoir de stockage couplé en communication fluidique avec ladite sortie de perméat.

10. Système de purification d'eau selon la revendication 9, comprenant en outre un trajet de recirculation couplé en communication fluidique avec ledit réservoir de stockage, ledit trajet de recirculation comprenant une unité de traitement à lumière ultraviolette opérationnelle pour traiter l'eau de perméat contenue dans ledit réservoir de stockage.

11. Système de purification d'eau selon la revendication 10, comprenant en outre un élément de purification disposé dans ledit trajet de recirculation, ledit élément de purification ayant un lit de résine échangeuse d'ions pour éliminer les ions de l'eau de perméat contenue dans ledit réservoir de stockage.

12. Système de purification d'eau selon la revendication 9, comprenant en outre un trajet de recirculation couplé en communication fluidique avec ledit réservoir de stockage, ledit trajet de recirculation comprenant un élément de purification ayant un lit de résine échangeuse d'ions pour éliminer les ions de l'eau de perméat contenue dans ledit réservoir de stockage.

13. Système de purification d'eau selon l'une quelconque des revendications précédentes, dans lequel la sortie du module de déionisation capacitif est sélectivement couplée en communication fluidique avec ladite entrée de ladite unité d'osmose inverse, et le système comprend en outre un second module de déionisation capacitif ayant une entrée couplée en communication fluidique avec ladite sortie de concentré de ladite unité d'osmose inverse et une sortie sélectivement couplée en communication fluidique avec ladite entrée de ladite unité d'osmose inverse, ledit second module de déionisation étant opérationnel pour éliminer les ions dissous du flot de concentré.

14. Système de purification d'eau selon la revendication 13, dans lequel ladite sortie dudit premier module de déionisation capacitif et ladite sortie dudit second module de déionisation capacitif sont couplées de manière alternée en communication fluidique avec ladite entrée de ladite unité d'osmose inverse.

15. Procédé de purification d'un flot d'eau d'alimentation, comprenant :
la direction du flot d'eau d'alimentation vers une entrée d'une unité d'osmose inverse pour produire un flot de sortie d'eau de perméat appauvrie en ions dissous et un flot de sortie d'eau concentrée enrichie en ions dissous ;
l'élimination des ions dissous du flot de sortie d'eau concentrée avec un module de déionisation capacitif ; et
la direction du flot de sortie d'eau concentrée, après que les ions dissous aient été éliminés par l'unité de déionisation capacitive, vers l'entrée de l'unité d'osmose inverse.

16. Procédé selon la revendication 15, comprenant en outre :
la collecte du flot de sortie d'eau de perméat dans un réservoir de stockage.

17. Procédé selon la revendication 16, comprenant en outre :
la recirculation de l'eau de perméat collectée dans le réservoir de stockage ; et
le traitement de l'eau recirculée en utilisant de la lumière ultraviolette.

18. Procédé selon la revendication 16 ou la revendication 17, comprenant en outre :
la recirculation de l'eau de perméat collectée dans le réservoir de stockage ; et
le filtrage de l'eau recirculée en utilisant un élément de purification ayant un lit de résine échangeuse d'ions.

19. Procédé selon l'une quelconque des revendications 15 à 18, comprenant en outre :
le prétraitement du flot d'eau d'alimentation avant la direction du flot d'eau d'alimentation vers l'entrée de l'unité d'osmose inverse.

20. Procédé selon la revendication 19, dans lequel le prétraitement comprend la capture des matières particulaires en suspension dans le flot d'eau d'alimentation.

21. Procédé selon la revendication 19 ou la revendication 20, dans lequel le prétraitement comprend l'élimination des composés organiques présents dans le flot d'eau d'alimentation.

22. Procédé selon l'une quelconque des revendications 19 à 21, dans lequel le prétraitement comprend l'élimination des halogènes présents dans le flot d'eau d'alimentation.

23. Procédé selon l'une quelconque des revendications 19 à 22, comprenant en outre l'augmentation de la pression du flot d'eau d'alimentation alimenté à l'entrée de l'unité d'osmose inverse.

24. Procédé selon l'une quelconque des revendications 19 à 23, comprenant en outre la purification du flot d'eau de perméat avec un élément de purification secondaire en aval de l'unité d'osmose inverse.
